# FASCICULE DE BREVET EUROPEEN

(11) **EP 2 510 426 B1**
(45) Date de publication et mention de la délivrance du brevet: **06.11.2013**
(21) Numéro de dépôt: 10799074.9
(22) Date de dépôt: 07.12.2010
(51) Int. Cl.: G06F 3/048, H04L 29/06, H04L 12/58

(54) **PROCEDE, TERMINAL ET SYSTEME DE COMMUNICATION PAR MESSAGES NON VERBAUX**
VERFAHREN, ENDGERÄT UND SYSTEM ZUR KOMMUNIKATION ÜBER NONVERBALE NACHRICHTEN
METHOD, TERMINAL AND SYSTEM FOR COMMUNICATING BY NONVERBAL MESSAGES

(30) Priorité: 07.12.2009 FR 0958723
(43) Date de publication de la demande: 17.10.2012
(73) Titulaire: Orange, 75015 Paris (FR)
(72) Inventeur: CORBETT, Giles, Londres W4 2HQ (GB); BEARDOW, Paul, Easton S021 1EN (GB); PABOT, Romain, F-75003 Paris (FR); BOURGANEL, Remy, F-75013 Paris (FR); DESCOGNETS, Paula, F-92410 Ville D'Avray (FR); ULRICH, Ghislain, F-75017 Paris (FR)
(74) Mandataire: Regimbeau
(86) Numéro de dépôt international: PCT/FR2010/000814
(87) Numéro de publication internationale: WO 2011/070246

(56) Documents cités:
- WO-A1-2004/056083
- PETER SAINT-ANDRE: "Streaming XML with Jabber/XMPP", IEEE INTERNET COMPUTING, vol. 9, no. 5, 1 septembre 2005 (2005-09-01), pages 82-89, XP002584885, DOI: 10.1109/MIC.2005.110

## Description

La présente invention concerne un procédé, un terminal et un système de communication par messages non verbaux, notamment lors d'une session de messagerie instantanée.

Les communications en ligne par messagerie instantanée, largement utilisées de nos jours, sont séquentielles: un utilisateur saisit un message verbal au moyen d'un clavier puis l'envoie à un deuxième utilisateur, ce dernier reçoit le message puis répond à celui-ci par un deuxième message. Généralement, la discussion entre utilisateurs requiert que chacun réponde après l'autre. On entend ici par "verbal" ce qui se rapporte aux mots saisis par et significatifs pour les utilisateurs, notamment des messages comprenant des mots écrits.

Ces échanges reflètent ainsi une conversation à vive voix entre les protagonistes, toutefois sans restituer la communication non verbale et plus intime qui accompagne généralement l'échange de mots. Il s'agit par exemple de la gestuelle ou de certaines expressions comportementales.

Certaines tentatives d'amélioration de la communication non verbale ont pu être proposées, comme par exemple une codification de l'écriture verbale pour refléter certaines humeurs: l'utilisation de caractères majuscules pour exprimer la colère ou indiquer l'utilisation d'une voix très forte. Cette codification, pour qu'elle puisse être connue et mise en oeuvre de façon appropriée par les utilisateurs, ne peut cependant exprimer qu'un petit nombre d'humeurs et d'expressions comportementales.

Il existe également, en marge des échanges de messages verbaux, l'envoi séquentiel de fichiers graphiques collaboratifs entre les utilisateurs. Les dessins constituent en effet un vecteur efficace d'expression et de transmission des émotions, comme le montrent au quotidien les artistes et certaines approches thérapeutiques.

Chacun des utilisateurs peut ajouter sa propre contribution au fichier graphique échangé de sorte à exprimer certaines émotions. Toutefois, ces échanges sont ralentis du fait de la taille du fichier graphique à transmettre. Il peut en résulter un décalage avec une discussion parallèle par messages verbaux ou un ralentissement de celle-ci.

Par ailleurs, après maints échanges, les contributions des différents utilisateurs deviennent difficiles à identifier.

Il est en outre connu du document WO 2004/056083 un mécanisme d'échange de données d'interaction graphique entre des utilisateurs.

Des données d'encre ou *ink data* sont générées lorsqu'un utilisateur dessine sur l'écran tactile de son équipement, puis sont transmises à d'autres utilisateurs. Ces données d'encre représentatives de nouvelles interactions sur l'écran sont prises en compte pour mettre à jour l'affichage graphique sur les dispositifs des utilisateurs.

Toutefois, ces données d'encre sont représentatives d'une reproduction visuelle des graphiques dessinés par les utilisateurs dans une référence commune telle qu'une grille de points dotée d'une largeur prédéterminée.

Un inconvénient de ce mécanisme réside dans le fait que les données d'encre échangées étant de nature graphique, elles peuvent rapidement devenir volumineuses et introduire des délais dans leur transmission entre dispositifs.

En outre, des traitements doivent être prévus au niveau des dispositifs émetteurs de telles données afin de traduire les données d'interaction sur l'écran en des données d'encre établies dans la référence commune. Ces traitements peuvent également introduire des délais inutiles.

La présente invention vise à pallier ces différents inconvénients de l'art antérieur en proposant un nouveau mode de communication instantanée entre utilisateurs distants disposant chacun d'un terminal de communication, basé sur une simultanéité de transmission de messages non verbaux favorisant l'expression d'un grand nombre d'humeurs et d'expressions comportementales propres de chacun des utilisateurs.

A cet effet, la présente invention concerne un procédé de communication par messages non verbaux entre un premier terminal et au moins un deuxième terminal, munis chacun d'un écran tactile, comprenant les étapes consistant à :
- obtenir, comme données d'interaction écran, des événements de toucher générés par un système de contrôle de l'écran tactile du premier terminal en réponse à au moins une action de contact d'un utilisateur sur l'écran tactile dudit premier terminal ;
- transmettre lesdites données d'interaction écran de type événements de toucher audit au moins un deuxième terminal au travers d'un réseau de communication ;
- sur chacun desdits premier et deuxième terminaux, convertir lesdites données d'interaction écran de type événements de toucher en données d'image graphique correspondant à ladite au moins une action de contact et combiner lesdites données d'image graphique avec des données d'une image graphique déjà affichée sur l'écran tactile du terminal de sorte à mettre à jour l'affichage de l'image graphique sur le terminal.

Les données d'interaction écran de type événements de toucher sont des données brutes générées par l'écran tactile lors de l'interaction de l'utilisateur, telles que des événements informatiques de toucher (*"touch events"*), alors que les données d'image graphique qui en dérivent sont visuelles et constituent la nouvelle contribution graphique de l'utilisateur à afficher.

Cette contribution graphique résulte des actions de contact de l'utilisateur sur l'écran, qu'il s'agisse indifféremment d'un dessin de l'utilisateur sur l'écran tactile de son terminal, d'une action de pointage, d'une action de tracé, ou encore d'une action d'écriture etc.

Selon l'invention, seules les données d'interaction écran de type événements de toucher, et non des données graphiques ou visuelles telles qu'une image résultant du dessin de l'utilisateur, sont transmises entre les utilisateurs, ce qui réduit considérablement le volume de données transférées.

En outre, en récupérant directement les événements informatiques générés par le système de contrôle et en les transmettant inchangés, on évite des traitements inutiles avant transmission au niveau du terminal qui va les émettre. Les données d'interaction écran de type événements de toucher sont ainsi transmises au plus vite aux terminaux. Un affichage temps réel des interactions écran est ainsi favorisé.

On peut notamment utiliser des écrans tactiles sur étagère conforme à une norme d'interfaçage qui produit des événements de toucher (*touch events*)*,* ce qui permet d'assurer une compatibilité entre les différents terminaux d'utilisateur.

Par ailleurs, en transférant uniquement les données de la nouvelle contribution, on économise le transfert des contributions antérieures. Ainsi, selon l'invention également, les données d'interaction écran reçues sont combinées, après conversion, à l'image déjà affichée reprenant d'ailleurs les contributions antérieures. Par ce mécanisme, l'invention permet également de conserver, à moindre coût (sans mémorisation dans une mémoire dédiée), les contributions antérieures.

Il en résulte des échanges plus rapides, des traitements sur les terminaux plus rapides et donc une communication non verbale plus représentative des émotions et comportements instantanés.

Enfin, l'utilisation du dessin apporte une infinité de façons d'exprimer ses humeurs ou un comportement.

La communication non verbale selon l'invention peut constituer l'échange principal d'une session de messagerie instantanée ou être une communication annexe d'une communication verbale existante de messagerie instantanée.

Dans un mode de réalisation, lesdites données d'interaction écran sont transmises au cours d'une session de messagerie instantanée basée sur le protocole XMPP. Bien que le protocole XMPP soit utilisé efficacement pour la transmission de messages verbaux, les inventeurs ont observé qu'avec peu d'adaptations, ce protocole XMPP permet la transmission des données non verbales assimilables par une machine informatique à moindre coût, tout en satisfaisant la (quasi)-instantanéité des communications.

En particulier, lesdites données d'interaction écran sont encodées selon un format binaire, à l'intérieur d'un élément XML d'un message XMPP. Cette disposition permet de satisfaire aux conditions de limite de débit du trafic XMPP (généralement 2 kilo-octets.s⁻¹), malgré le volume relatif de données d'interaction. En effet, le langage XML étant très prolixe du fait de l'indication de la structure par des balises, l'utilisation d'éléments XML pour renseigner chacune des données d'interaction écran s'avère trop consommatrice de débit, en raison du grand nombre de balises XML à utiliser.

Selon une caractéristique particulière, le procédé comprend une étape de mémorisation, dans une mémoire tampon, d'une pluralité de données d'interaction écran correspondant à une pluralité d'événements de toucher sur l'écran tactile avant transmission de cette pluralité de données d'interaction écran au sein d'un même message du protocole XMPP. De la sorte, on évite la transmission d'un message pour chaque événement de toucher, ce qui augmenterait le débit de données échangées, et donc le temps moyen de transmission.

En particulier, ladite pluralité d'événements de toucher comprend des événements d'interaction simultanée sur un même écran tactile multi-touches. L'utilisation d'écrans tactiles multi-touches permet d'améliorer l'interaction des utilisateurs, tout en offrant une plus grande palette de combinaisons possibles de dessins susceptibles de traduire l'humeur ou le comportement de l'utilisateur les ayant provoquées.

Dans un mode de réalisation de l'invention, le procédé comprend une étape consistant à générer, localement sur ledit deuxième terminal, des données d'image graphique à partir de données d'interaction écran locales de type événements de toucher résultant d'au moins une action de contact d'un utilisateur sur l'écran tactile dudit deuxième terminal; et dans lequel les données d'image graphique converties à partir des données d'interaction écran locales reçues dudit premier terminal et les données d'image graphique générées localement sur ledit deuxième terminal sont combinées, aux données d'image graphique déjà affichée, de façon opposée entre elles. On entend par "de façon opposée", le fait que les données peuvent être affichées de deux façons relativement à un état de référence. C'est en particulier le cas pour des images tridimensionnelles où l'état référent est par exemple un plan dit "de repos" et les deux façons d'afficher jouent sur l'effet de relief pour créer soit un enfoncement apparent (indentation) pour une façon, soit une protubérance apparente (protrusion) pour la façon opposée.

Cette disposition permet de distinguer, à moindre coût, les contributions de chacun dans le temps.

En particulier, les images graphiques affichées sur lesdits premier et deuxième terminaux sont des images tridimensionnelles miroir l'une de l'autre par inversion de valeurs graphique selon au moins un axe. Généralement, on procède à l'inversion des valeurs selon l'axe z de profondeur. Ainsi, chaque utilisateur voit de la même façon sur son terminal, sa propre contribution (par enfoncement sous le doigt de l'utilisateur par exemple) et la contribution de l'utilisateur distant (par protrusion correspondant à un ou plusieurs doigts de l'autre utilisateur derrière le dessin). L'image tridimensionnelle ainsi obtenue peut s'apparenter à une membrane élastique de chaque côté de laquelle les deux utilisateurs apportent leur contribution. Une telle mise en oeuvre offre une simplicité importante pour chacun des utilisateurs, dans la mise en oeuvre de la communication non verbale et dans la compréhension des messages provenant de l'autre utilisateur.

En outre, cet affichage "miroir" introduit une symétrie qui permet de conserver une utilisation identique de l'application de communication non verbale que l'utilisateur soit appelant ou appelé: notamment, sa propre contribution résulte par exemple toujours en un enfoncement localisé de l'image tridimensionnelle, et celle de l'utilisateur distant toujours en une protrusion.

Dans un mode de réalisation de l'invention, une donnée d'image graphique à combiner et correspondant à au moins une coordonnée issue de l'action de contact est multipliée par un coefficient prédéfini si cette donnée d'image graphique est de signe opposé à la donnée d'image graphique ayant la même coordonnée dans l'image graphique déjà affichée. Comme décrit ci-dessus, la notion d"'opposé" se rapporte à un état (plan) de référence de l'image.

Par cette disposition, la contribution d'un utilisateur (par exemple contribution positive - protrusion) est modulée en fonction de la contribution passée (qui est donc affichée) de l'autre utilisateur. A titre d'exemple, cette modulation peut résulter en une contribution plus longue de l'utilisateur pour atténuer celle de l'autre. Ainsi, un dialogue non verbal peut s'établir, de façon très interactive, entre les deux utilisateurs.

Selon une caractéristique de l'invention, le procédé comprend, sur un terminal, une étape périodique de pondération des données d'image graphique correspondant à une image affichée sur l'écran tactile du terminal, ladite pondération étant agencée pour faire évoluer des données d'image graphique vers des données d'image graphique correspondant à une image de référence, notamment lorsque aucune nouvelle donnée d'interaction écran n'est reçue par le terminal ou générée localement sur le terminal.

L'image de référence correspond notamment à l'état de référence évoqué précédemment. La disposition présentée ici permet d'atténuer les contributions anciennes au profit des contributions récentes, et permet donc une meilleure lecture des émotions courantes des utilisateurs. En effet, au cours d'une conversation non verbale, les émotions évoluent de telle sorte que celles-ci deviennent moins significatives (d'où leur pondération) et peuvent donc être supprimées à terme (état correspondant à l'image de référence). Dans notre exemple précédent, cela revient à ce qu'au bout d'un certain temps (notamment fixé et/ou paramétré par l'utilisateur) la "membrane élastique" redevienne plane.

De préférence, la pondération est identique sur les divers terminaux, assurant un effacement similaire et donc la conservation d'images miroir l'une de l'autre.

Dans un mode de réalisation, le procédé comprend les étapes suivantes :
- obtenir localement, comme données d'interaction écran, des événements de toucher générés par un système de contrôle de l'écran tactile du deuxième terminal et résultant d'au moins une action de contact d'un utilisateur sur l'écran tactile dudit deuxième terminal ; et
- si, pendant une période prédéfinie, lesdites données d'interaction écran générées localement et les données d'interaction écran dudit premier terminal reçues par ledit deuxième terminal correspondent sensiblement à une même zone de l'image à afficher, générer une signal sensoriel au niveau dudit deuxième terminal, par exemple un son, une vibration ou un changement de couleur de l'image affichée.

De la sorte, les utilisateurs sont avertis dès qu'ils ont un comportement similaire, reflétant par exemple des émotions comparables. L'utilisation d'un signal sensoriel est particulièrement simple à mettre en oeuvre dans des terminaux de type téléphone portable ou assistant personnel.

Bien entendu, la notion de "même zone" tient compte de l'effet miroir évoqué précédemment entre les affichages sur les terminaux communiquant.

L'invention concerne également un terminal de communication par messages non verbaux comprenant :
- un écran tactile doté d'un système de contrôle apte à générer, comme données d'interaction écran locales, des événements de toucher en réponse à au moins une action de contact d'un premier utilisateur sur l'écran tactile ;
- un moyen de communication apte à recevoir, d'au moins un deuxième terminal, des données d'interaction écran de type événements de toucher représentatifs d'au moins une action de contact d'un deuxième utilisateur sur un écran tactile du deuxième terminal ;
- un moyen de conversion pour convertir lesdites données d'interaction écran de type événements de toucher générées localement et/ou reçues, en données d'image graphique locales et/ou reçues ; et
- un moyen de combinaison pour combiner ces données d'image graphique locales et/ou reçues avec des données d'une image graphique déjà affichée sur l'écran tactile du terminal de sorte à mettre à jour l'affichage de l'image graphique sur ce terminal.

Le terminal de communication présente des caractéristiques et avantages analogues au procédé de communication selon l'invention.

De façon optionnelle, le terminal peut comprendre des caractéristiques se rapportant aux étapes du procédé de communication par messages non verbaux exposé précédemment.

En particulier, ledit moyen de communication est également apte à transmettre, au sein d'une session XMPP établie avec ledit autre terminal, les données d'interaction écran générées locales de type événements de toucher. Certains aspects relatifs au contenu des messages XML échangés lors de cette session ont été présentés précédemment.

L'invention concerne également un système de communication par messages non verbaux comprenant :
- un serveur apte à établir une session de messagerie instantanée entre au moins un premier et au moins un deuxième terminal ;
- au moins un premier et un deuxième terminal comme décrits ci-dessus aptes à s'échanger des données d'interaction écran de type événements de toucher au moyen de ladite session de messagerie instantanée.

Le serveur peut être du type serveur de messagerie instantanée classique qui contrôle, de façon connue en soi, l'établissement de la session entre utilisateurs et opère le routage des messages échangés.

Le système de communication présente des caractéristiques et avantages analogues au procédé de communication selon l'invention.

De façon optionnelle, le système peut comprendre des caractéristiques se rapportant aux étapes du procédé de communication par messages non verbaux exposé précédemment.

En particulier, le système est configuré de sorte que les données d'interaction écran échangées entre les deux dispositifs sont codées sous forme binaire à l'intérieur d'un élément XML d'un message XMPP.

L'invention concerne également un moyen de stockage d'informations comprenant des instructions pour un programme informatique adapté à mettre en oeuvre le procédé de communication conforme à l'invention lorsque ce programme est chargé et exécuté par un système informatique.

L'invention concerne également un programme d'ordinateur lisible par un microprocesseur, comprenant des instructions pour la mise en oeuvre du procédé de communication conforme à l'invention, lorsque ce programme est chargé et exécuté par le microprocesseur.

Les moyens de stockage d'information et programme d'ordinateur présentent des caractéristiques et avantages analogues aux procédés qu'ils mettent en oeuvre.

D'autres particularités et avantages de l'invention apparaîtront dans la description ci-après, illustrée par les dessins ci-joints, dans lesquels :
- la **figure 1** représente un exemple d'interface graphique d'une application de communication non verbale selon l'invention, montrant une "membrane élastique" sur laquelle apparaissent les contributions non verbales des utilisateurs;
- la **figure 2** représente un système pour la mise en oeuvre de la présente invention ;
- la **figure 3** montre une configuration matérielle particulière d'un équipement, notamment un terminal du système de la figure 2, apte à une mise en oeuvre du procédé selon l'invention;
- la **figure 4** représente, sous forme d'ordinogramme, des étapes relatives à l'établissement d'une session de messagerie instantanée pour la mise en oeuvre de l'invention;
- la **figure 5** représente, sous forme d'ordinogramme, des étapes relatives à l'interaction d'un utilisateur sur l'écran tactile de son terminal, selon les enseignements de l'invention;
- la **figure 6** illustre un exemple de messages non verbaux échangés conformément à l'invention pour produire la contribution représentée sur la **figure 1**;
- la **figure 7** représente, sous forme d'ordinogramme, des étapes relatives au traitement d'un message non verbal reçu;
- la **figure 8** représente, sous forme d'ordinogramme, des étapes relatives au traitement local de données d'interaction écran pour mettre à jour l'affichage d'un terminal;
- la **figure 9** illustre l'influence du temps d'appui sur l'affichage d'une contribution utilisateur; et
- la **figure 10** illustre un comportement symétrique de la part de deux utilisateurs communiquant.

Comme présenté ci-dessus, la présente invention est relative à la communication de messages non verbaux entre utilisateurs représentant des contributions de ces utilisateurs sur une même image graphique. L'invention s'applique à une session de messagerie instantanée entre un nombre quelconque d'utilisateurs, notamment deux ou plus. Pour des raisons de concision, on limitera la suite de la description à une session entre deux utilisateurs.

L'image graphique qui s'affiche pour les deux utilisateurs peut être une image bidimensionnelle ou tridimensionnelle sur laquelle chaque contribution est exprimée à l'aide de caractéristiques d'affichage distinctes, par exemple des couleurs distinctes (le noir s'opposant au blanc sur un fond gris) ou des informations de relief (chaque image tridimensionnelle étant affichée selon un plan (X,Y), l'information de relief résultant de la composante Z par rapport à un plan de référence, par exemple (X,Y,O)).

Pour les besoins d'illustration de la présente invention, on se limitera à la description d'une image tridimensionnelle dont chaque contribution s'exprime par une information de relief (composante z selon l'axe Z): enfoncement (z<0) pour une contribution par l'utilisateur local et protrusion (z>0) pour une contribution résultant de l'utilisateur distant.

Dans ce cas, l'image affichée à l'un des utilisateurs peut être l'image "miroir" de celle affichée à l'autre utilisateur par simple inversion de la profondeur (donc en inversant les valeurs selon l'axe z).

On notera qu'une telle information de relief est en particulier facilement détectable par les utilisateurs.

Par l'effet miroir, la contribution de chaque utilisateur apparaît de façon opposée à l'autre utilisateur selon l'axe z de la profondeur uniquement. Une protrusion apparaissant à l'écran d'un utilisateur reflète un enfoncement produit par l'autre utilisateur et dont les données correspondantes sont envoyées selon les enseignements de l'invention.

Le plan (X, Y) peut être conservé identique pour les utilisateurs permettant de conserver des sens (pour l'écriture par exemple).

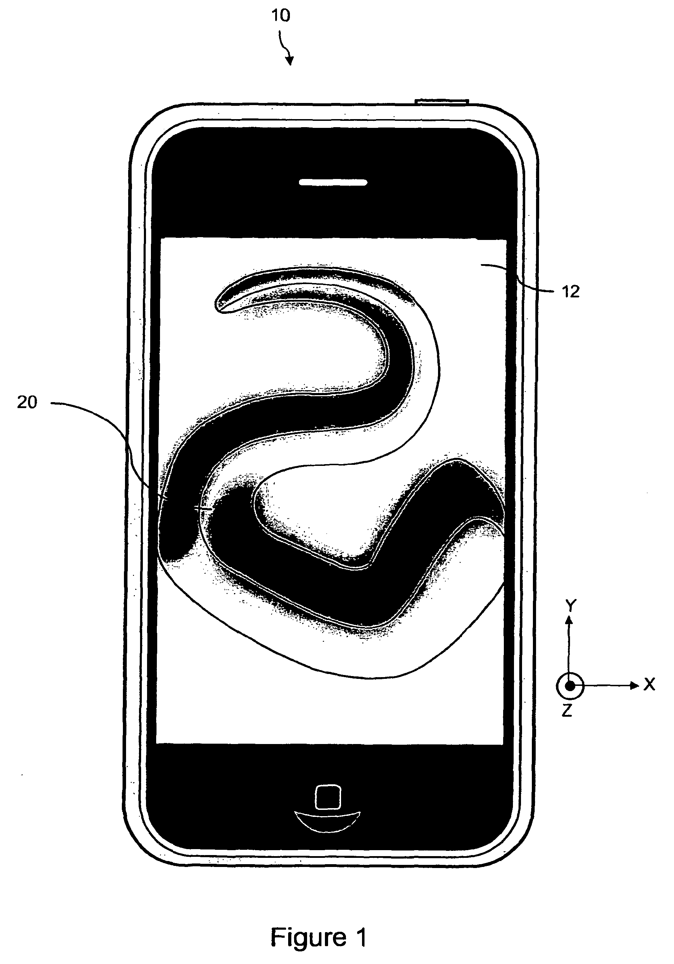

Toutefois, il peut être prévu de l'inverser également, telle un réel effet miroir. Par ce comportement, l'image réciproque affichée sur les terminaux des deux utilisateurs s'apparente à une membrane élastique située entre eux deux, comme représentée sur la **figure 1** pour l'un des utilisateurs.

Sur cette figure, la membrane élastique a une position de repos (zones planes ; z=0) de laquelle ressort le dessin réalisé par l'autre utilisateur. On remarquera que l'invention s'applique à d'autres actions de contact de l'utilisateur sur l'écran tactile que l'action de dessin, par exemple une action de pointage, de tracé ou d'écriture, etc.

Sur cette image, l'utilisateur distant a dessiné sensiblement un S en ralentissant la vitesse du tracé vers la queue basse du "S" (relief et largeur du tracé plus importants).

L'utilisateur du terminal 10, typiquement un téléphone mobile, voit donc, sur son écran tactile 12, un "S" inversé 20 apparaissant en relief positif (protrusion) avec un trait plus épais vers la queue basse du "S" exprimant l'insistance de l'autre utilisateur lors du tracé de cette partie.

L'utilisateur du terminal 10 peut également interagir sur cet écran pour communiquer de façon non verbale, en réponse à l'expression de l'autre utilisateur ou simultanément. Pour ce faire, cet utilisateur va à son tour tracer un dessin exprimant ses émotions sur l'écran tactile 12.

Comme évoqué précédemment, cette contribution de l'utilisateur du terminal 10 va se combiner à l'image déjà affichée, sous forme de relief négatif (enfoncement ; z<0) pour les parties dessinées sur les zones de repos de la membrane ou sous forme d'atténuation du "S" en relief là où une protrusion (du "S" inversé 20) existe. Dans ce dernier cas, les utilisateurs modifient donc les actions des autres utilisateurs.

Selon l'invention, les messages échangés entre ces utilisateurs pour transmettre ces contributions contiennent seulement des informations brutes d'interaction sur l'écran, typiquement des événements de toucher ("*touch events*" *-* événements informatiques) générés de façon classique par les interfaces d'écran tactile.

Cela permet, dans une session de messagerie instantanée, de transmettre ces contributions en (quasi) temps réel et donc d'obtenir dynamiquement une modification de la membrane affichée en temps réel selon les contributions de chacun, sur chaque terminal.

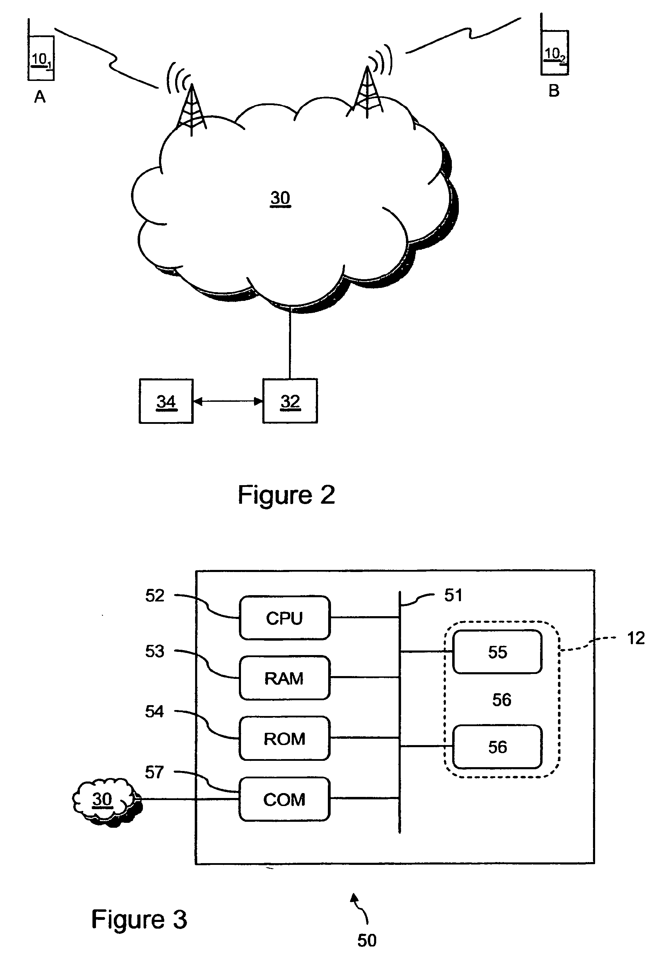

La **figure 2** montre un exemple de système pour la mise en oeuvre de la communication par messages non verbaux selon l'invention.

Dans ce système, deux terminaux 10₁ et 10₂ de type téléphones mobiles sont reliés à un réseau de téléphonie mobile 30. Chaque terminal est muni de moyens logiciels permettant la mise en oeuvre de l'invention comme décrite ci-après, et notamment d'une application capable de communiquer au travers d'une session de messagerie instantanée mettant en oeuvre le protocole de transport XMPP ("*eXtensible Messaging and Presence Protocol*")*.*

Un serveur de messagerie instantanée 32 est également relié au réseau 30. Ce serveur est par exemple du type serveur Jabber bien connu de l'homme de l'art pour établir et maintenir des sessions de messagerie instantanée entre utilisateurs.

Un serveur de carnets d'adresses 34 peut également être prévu. Ce serveur 34 est synchronisé avec les terminaux 10ᵢ de telle sorte que les carnets d'adresses constitués localement sur ces terminaux sont dupliqués sur ce serveur. Ainsi, l'établissement d'une session de messagerie instantanée par requête au serveur 32 peut être opéré par récupération des adresses Jabber (adresses définies selon le format de messagerie électronique: 'utilisateur@serveur') mémorisées dans ces différents carnets d'adresses du serveur 34.

La **figure 3** montre schématiquement un équipement 50 pour la mise en oeuvre de l'invention, et notamment l'un quelconque des terminaux 10ᵢ.

Le système 50 comprend un bus de communication 51 auquel sont reliés une unité centrale de traitement ou "microprocesseur" 52, une mémoire vive 53, une mémoire morte 54, un dispositif d'affichage 55, un dispositif de pointage 56, une interface de communication 57 et éventuellement d'autres périphériques (lecteur de disquette ou disques, etc.).

Le dispositif d'affichage 55 et le dispositif de pointage 56 sont en particulier mis en oeuvre au sein d'un même écran tactile 12. L'utilisation de cet écran tactile, pouvant être un équipement sur étagère, est contrôlée par un contrôleur d'écran qui génère des événements de toucher ("*touch events*") suite à l'action d'un utilisateur sur cet écran et qui produit un affichage résultant d'une image produite par une carte graphique (non représentée) interne au terminal.

Par exemple, l'écran tactile peut avoir une définition de 320 x 480 pixels.

De façon connue en soi, le contrôleur est capable d'identifier les interactions de l'utilisateur, c'est-à-dire notamment le début, la fin et donc la durée d'une action d'un doigt. Cette action peut être un déplacement, un appui sans déplacement, un retrait du doigt, un clic, etc. Le contrôleur génère alors un événement *InputEvent* pour chacune de ces interactions.

En particulier, si l'écran tactile est multi-touches (plusieurs doigts pouvant agir simultanément sur l'écran), le contrôleur est capable de discriminer chacune des interactions résultant de chaque doigt et donc de générer plusieurs événements pour des interactions simultanés.

On notera en outre que le contrôleur traduit généralement une zone d'appui de l'utilisateur en un point actif, par exemple le centre de cette zone, afin d'identifier chaque interaction par une seule information de positionnement. Des informations complémentaires telles que la dimension de la zone d'appui (plus grande longueur ou diamètre par exemple) peuvent être prévues. Dans cet exemple, l'information de dimension permet de distinguer un appui fort (écrasement du doigt) d'un appui léger (zone plus petite).

De façon connue en soi, les événements *InputEvent* sont constitués d'une pluralité d'événements élémentaires *InputTouchEvent* correspondant chacun à l'évolution de l'interaction écran pendant chaque période d'acquisition élémentaire (par exemple 1/100s) au cours de l'événement *InputEvent.*

Un tel événement *InputEvent* comprend par exemple la position (x,y) du toucher et une information d'horodatage (*timestamp*), par exemple en référence à une horloge interne ou une horloge réseau.

Dans le mode de réalisation illustratif de l'invention, la carte graphique commandant l'affichage sur l'écran est adaptée pour gérer des images tridimensionnelles selon trois axes X, Y, Z et produire une image d'affichage selon le plan (X,Y) avec des information de relief selon l'axe Z.

Diverses techniques d'affichage 3D sur écran bidimensionnel peuvent être mises en oeuvre. Comme montrée sur la figure 1, cela peut résulter de la création d'ombres donnant une impression de relief. La quantité d'ombres dépend alors de l'amplitude (valeur |z|) du relief local. En variante, un quadrillage (courbes de niveaux) peut être utilisé.

Ces techniques peuvent mettre en oeuvre une surface maillée (*mesh*) qui au repos est coplanaire au plan (X, Y, 0).

La mémoire morte 54 comprend les programmes dont l'exécution permet la mise en oeuvre du procédé selon l'invention, et notamment le code source de l'application de communication non verbale.

Lors de l'exécution de programmes, le code exécutable de ceux-ci est chargé en mémoire vive 53, type RAM, et exécuté par le microprocesseur 52. Cette exécution permet le dialogue avec le contrôleur de l'écran tactile 12 pour contrôler l'affichage et l'acquisition des données d'interaction sur l'écran, et permet également l'envoi ou la réception de messages XMPP tels que décrits ci-après via l'interface de communication 57. Cette dernière permet notamment la connexion au réseau 30.

La mémoire RAM permet également la mise en oeuvre d'une mémoire tampon pour mémoriser les événements de toucher produits, comme évoqué par la suite.

L'équipement décrit ici et, particulièrement, l'unité centrale 52, sont susceptibles de mettre en oeuvre tout ou partie des traitements décrits en lien avec les **figures 1****,** **2** **et** **4** à **10**, pour mettre en oeuvre les procédés objets de la présente invention et constituer les terminaux et systèmes objets de la présente invention.

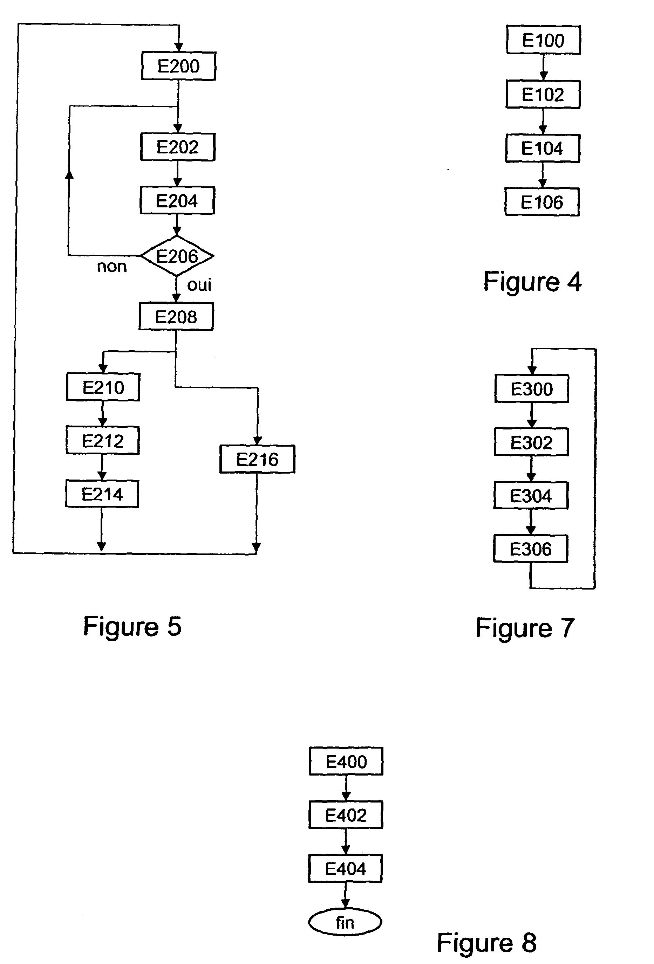

La **figure 4** montre l'établissement d'une session de messagerie instantanée entre deux utilisateurs pour une application de communication non verbale.

Pour un utilisateur A souhaitant communiquer avec un deuxième utilisateur B, le traitement débute par l'étape E100 au cours de laquelle l'utilisateur A sélectionne l'utilisateur B aux fins de demander l'établissement d'une session de messagerie instantanée.

Cette sélection peut être réalisée par l'indication directe de l'adresse Jabber de l'utilisateur B au niveau d'une interface dédiée de l'application de communication non verbale lors de son lancement. L'adresse Jabber peut prendre la forme suivante: "utilisateurB@serveur.com" où "utilisateurB" est l'identifiant unique de l'utilisateur B sur le serveur "serveur.com" représentant ici le serveur Jabber 32.

En variante, l'indication de l'adresse peut être réalisée par la sélection du contact "utilisateur B" dans le carnet d'adresses du terminal 10₁. Un menu contextuel permet alors à l'utilisateur A de lancer l'application de communication non verbale depuis le carnet d'adresses, à partir du contact au niveau duquel est renseignée l'adresse "utilisateurB@serveur.com".

En variante encore, l'utilisateur A peut indiquer, dans l'interface, ou avoir renseigné, au niveau du contact de son carnet d'adresses, un identifiant unique de l'utilisateur B (par exemple un numéro de téléphone) sans qu'il s'agisse directement d'une adresse Jabber.

Au terme de cette sélection, l'application de communication non verbale s'exécute sur le terminal de l'utilisateur A et affiche une image dotée d'une texture prédéfinie sans aucune contribution dessus (appelée ci-après image de référence sans relief où z=0 pour tout point affiché).

Une demande d'établissement d'une session de messagerie instantanée est alors envoyée au serveur Jabber 32 (étape E102). Cette demande d'établissement contient les adresses des utilisateurs ou les identifiants uniques de ceux-ci.

Dans notre exemple, les deux adresses sont "utilisateurA@serveur.com" et "utilisateurB@serveur.com" utilisant un même serveur Jabber "serveur.com". Toutefois, les adresses des utilisateurs A et B peuvent être rattachées à deux serveurs de messagerie instantanée distincts auquel cas ces deux serveurs assurent ensemble l'établissement de la session de messagerie instantanée et le routage des messages échangés comme décrits pas la suite.

A l'étape E104, le serveur 32 reçoit la demande, récupère si nécessaire, à l'aide des identifiants uniques, les adresses Jabber dans le serveur 34, puis établit une session XMPP entre les deux utilisateurs A et B. L'établissement d'une session XMPP est connu en soi par l'homme de l'art. Il comprend notamment une notification à l'utilisateur B l'invitant à lancer son application de communication non verbale s'il souhaite communiquer avec l'utilisateur A et si ce n'est pas déjà le cas.

Une fois la session établie, les deux utilisateurs A et B peuvent utiliser l'application lancée localement sur chacun des deux terminaux 10₁ et 10₂ pour communiquer par messages non verbaux. Les deux terminaux sont alors dans un état d'attente d'événement (E106).

Cet état d'attente consiste principalement à mettre à jour périodiquement (par exemple chaque 1/10s) l'image affichée sur chacun des terminaux pour qu'elle redevienne similaire à l'image de référence (z=0 en tout point) au bout d'un certain temps en l'absence d'interaction de la part des utilisateurs.

Pour ce faire, les reliefs existants (z≠0) sur l'image affichée sur l'écran peuvent être atténués en multipliant par exemple la valeur z par un coefficient α prédéfini inférieur à 1: z ← α.z. Par exemple, α=0,9.

'z' étant un entier, on applique z← sign(z).└α.z┘, où sign(x) retourne le signe de 'x' et └┘ est la fonction "arrondi à l'entier inférieur", afin d'assurer une convergence vers l'image de référence plane (z=0)

A noter que la valeur 'z' peut être bornée, par exemple z ∈ [-50 pixels; zₘₐₓ=50 pixels] lorsque x et y (coordonnées respectivement selon l'axe X et l'axe Y) varient respectivement sur [0; 320] pixels et [0; 480] pixels. Dans cet exemple, il faut 3,7 secondes pour effacer une information de relief maximal (3,7 = -log(zₘₐₓ)/log(α) x période).

L'étape E106 marque la fin du traitement de la figure 4.

La figure 5 illustre les traitements réalisés au niveau de l'un quelconque des terminaux communiquant lorsque l'utilisateur de ce terminal interagit sur l'écran tactile 12 pour communiquer par message non verbal.

Partant de l'état d'attente (E200) correspondant à l'étape E106 ci-dessus, un utilisateur interagit, à l'étape E202, à l'aide de son doigt, sur l'écran tactile 12 de son terminal et y dessine une forme exprimant son humeur de l'instant.

Comme expliqué précédemment, le contrôleur d'écran tactile génère, de façon classique, des données brutes d'interaction au fur et à mesure du dessin. Ces données d'interaction écran sont connues sous la terminologie d'événements de toucher ou "*touch events*" et indiquent les coordonnées de la zone d'appui touchée par le doigt, accompagnées d'une information d'horodatage.

La décomposition d'un événement d'interaction en ensemble d'événements élémentaires de toucher dépend de la fréquence d'acquisition de ces informations par le contrôleur d'écran tactile. Plus cette fréquence est élevée, meilleure est l'interactivité mais plus grande est la quantité d'événements de toucher générés à transmettre selon l'invention.

Différents types d'événements sont identifiés par le contrôleur d'écran, par exemple un clic (*touch click*), un appui (*touch down*), un déplacement (*touch move*) ou une gestuelle prédéfinie (*touch gesture*).

A titre illustratif, un déplacement élémentaire du point (previousX,previousY) vers le point (newX,newY) pendant une période d'acquisition est récupéré sous la forme:

```
 InputTouchEvent {
    uint8 newX
    uint8 newY
    uint8 previousX
    uint8 previousY
 }
```

où les coordonnées sont codées sur des entiers de 8 bits. Une convention de valeurs peut être prédéterminée: 0 signifiant une position haute ou gauche et 255 signifiant une position basse ou droite.

Un appui sur un point correspond à: (previousX,previousY) = (newX,newY).

Une interaction, composées d'événements de toucher élémentaires, est alors mémorisée dans l'objet suivant:

```
 InputEvent {
     uint32 time
     uint32 duration
     uint8 numTouches
     InputTouchEvent touches[numTouches]
 }
```

où "time" indique un instant par rapport à un instant t₀ généralement défini par le premier événement (horodaté) d'un message à transmettre comme décrit par la suite, "duration" indique la durée de l'événement d'interaction (pouvant être de quelques secondes), "numTouches" indique le nombre d'événements élémentaires de toucher composant l'interaction et "touches" est un tableau reprenant les différents événements élémentaires *InputTouchEvent.*

On rappelle que, dans le cas d'un écran tactile multi-touches, plusieurs objets *InputElement* peuvent se chevaucher dans le temps et être générés sensiblement simultanément.

Pour permettre une interactivité forte entre les utilisateurs, les événements *InputEvent* peuvent être créés toutes les secondes si l'interaction correspondante de l'utilisateur dure plusieurs secondes. Pour l'obtention d'une interaction temps réel, ces événements *InputEvent* peuvent être générés à la détection de tout nouvel événement élémentaire de toucher, afin de transmettre ce dernier (et les éventuels autres événements élémentaires simultanés) au plus vite.

La congestion du réseau de communication peut également être prise en compte pour ajuster la périodicité de transmission (et donc de génération) des événements *InputEvent.*

Les événements *InputEvent* d'interaction sont ensuite mémorisés dans une mémoire tampon du terminal 10₁ de l'utilisateur A, à l'étape E204.

Tant que le nombre de données mémorisées dans la mémoire tampon n'atteint pas une valeur seuil ou qu'un délai d'attente n'a pas expiré depuis le premier événement mémorisé (test E206), on poursuit l'acquisition des événements (E202).

Le délai d'attente est choisi pour garantir une communication (quasi) temps réel, par exemple le délai vaut 1/25s. Le nombre seuil d'éléments est, quant à lui, choisi pour limiter la taille des messages à envoyer, par exemple ce seuil vaut cinq événements *InputEvent.*

Sinon (seuil atteint ou délai expiré), on procède à l'envoi des données d'interaction écran mémorisées dans la mémoire tampon, à l'aide d'un message du protocole XMPP, au cours des étapes E208 à E214.

La mise en mémoire tampon permet de regrouper plusieurs événements d'interaction au sein d'un même message XMPP et ainsi d'éviter de générer un trafic inutile en transmettant chacun de ces événements dans un message indépendant.

Bien entendu, les événements d'un même message sont de préférence suffisament simultanés pour garantir un traitement et un affichage temps réel. Le délai d'attente, par exemple 1/25 s, permet de limiter tout retard perceptible dans l'affichage.

A l'étape E208, les événements d'interaction mémorisés dans la mémoire tampon sont mis dans un même objet informatique nommé *Strokes-data*:

```
 Strokes-data {
    uint16 numEvents
    InputEvent events[numEvents]
 }
```

listant l'ensemble des événements *InputEvent* (*numEvents* étant leur nombre).

Les données mémorisées dans cet objet sont essentiellement des valeurs numériques entières.

A noter que l'instant t₀ évoqué précédemment se définit par rapport à l'instant du premier événement *InputEvent* listé dans l'objet *Strokes-data.*

A l'étape E210, cet objet est codé dans un format binaire, notamment chaque valeur numérique entière est codée en base 64.

Les données encodées sont alors insérées, à l'étape E212, dans un message XMPP de la session de messagerie instantanée entre les utilisateurs A et B, notamment au niveau d'un élément XML ayant la balise <strokes>:

```
 <message type="strokes" from="utilisateurA@serveur.com"
                                 to="utilisateurB@serveur.com">
    <strokes>base64(strokes-data)</strokes>
 </message>
```

Comme on le constate dans cet exemple, les données d'interaction écran (ici *Strokes-data*) sont transmises au sein d'un seul élément XML <strokes>. Ainsi, grâce au codage binaire mis en place, on évite de démultiplier le nombre de balises utilisées dans le message pour transmettre chacun des événements *InputEvent* ou *InputTouchEvent.* Il en résulte un volume de données plus faible, satisfaisant notamment aux contraintes de débit du protocole XMPP établies à 2 kilo-octets par seconde.

A l'étape E214, le message ainsi créé est transmis à l'utilisateur B via le serveur Jabber 32 pour que l'affichage de cet utilisateur soit mis à jour en tenant compte de l'interaction de l'utilisateur A, comme on le décrit par la suite en référence à la **figure 7**.

A noter que si, à l'expiration du délai, aucune donnée d'interaction n'est présente dans la mémoire tampon, aucun message n'est créé et transmis.

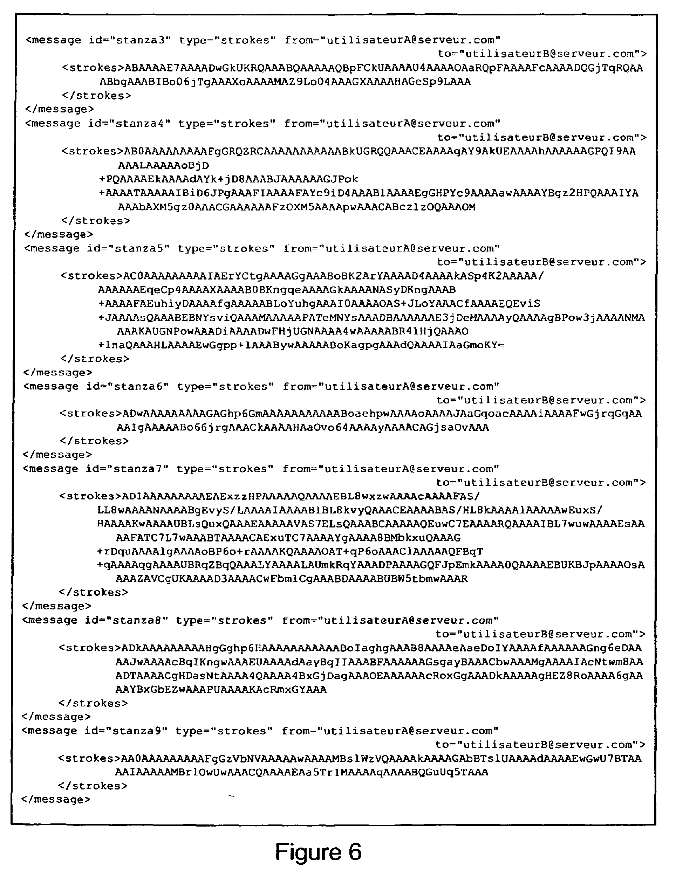

La **figure 6** montre différents messages XMPP transmis pour former le "S" de la **figure 1**. On observe que les identifiants des messages successifs (stanza3, stanza4, etc.) sont incrémentés de 1 afin de permettre un traitement chronologique au niveau du terminal récepteur de ces messages, ici "utilisateurB".

Les données d'interaction écran sont également traitées localement sur le terminal de l'utilisateur A, pour mettre à jour son propre affichage (étape E216 décrite ci-après en lien avec la **figure 8**). A noter que cette étape E216 est généralement réalisée en parallèle des étapes E210 à E214. Elle peut toutefois être mise en oeuvre ultérieurement, voire dès la production de chaque événement d'interaction *InputEvent* (E202) afin d'offrir une mise à jour de l'affichage plus rapide (affichage "temps réel").

Suite aux étapes E214 et E216, le terminal 10₁ retourne dans l'état d'attente E200.

La **figure 7** illustre le traitement, au niveau d'un des terminaux d'utilisateur, lors de la réception d'un message XMPP comprenant des données d'interaction écran (*Strokes-data* codées en base 64).

Partant de l'état d'attente (E300) correspondant aux étapes E106/E200 ci-dessus, le terminal 10₂ de l'utilisateur B reçoit un message XMPP en provenance de l'utilisateur A (étape E302).

L'application de messagerie instantanée exécutée sur le terminal récupère, du message reçu, les données codées dans la balise <strokes>, puis les décode (étape E304).

Ces données d'interaction écran *Strokes-data* décodées provenant de l'utilisateur A sont alors traitées localement lors de l'étape E306 similaire à l'étape E216 et décrite ci-après en lien avec la **figure 8**.

Suite à l'étape E306, le terminal 10₂ retourne dans l'état d'attente E300.

On décrit maintenant le traitement local, sur l'un quelconque des terminaux, des données d'interaction écran *Strokes-data* lors des étapes E216 et E306, en référence à la **figure 8**.

On rappelle ici que la contribution traitée lors de l'étape E216 est une contribution locale générant un relief d'affichage négatif (enfoncement ; z<0), alors que la contribution traitée lors de l'étape E306 est une contribution distante générant un relief d'affichage positif (protrusion ; z>0),

A l'étape E400, les données d'interaction écran *Strokes-data* ou *InputEvent* sont converties localement en données d'image graphique.

Dans l'exemple à titre illustratif, les données d'interaction écran sont converties en points (x,y,z) pour l'affichage où (x,y) correspond à un pixel d'affichage (là où a appuyé l'utilisateur - indiqué dans les événements reçus) et 'z' correspond à l'information de relief fonction de la façon dont l'appui a été réalisé. De la sorte, l'image affichée sur l'écran "s'enfonce" sous le doigt de l'utilisateur et "émerge" sur l'écran-de l'autre utilisateur.

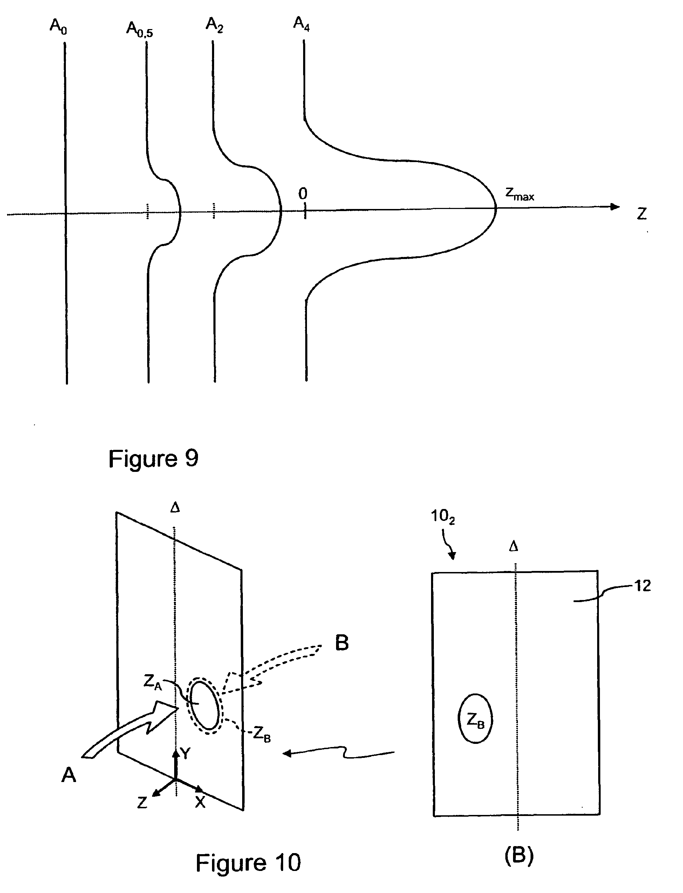

A noter que, du fait de l'affichage miroir de l'image entre les deux terminaux, une symétrie des pixels peut être opérée par rapport à l'axe Δ (voir **figure 10**) pour la contribution de l'utilisateur distant (étape E306): (x,y) ← (320-x, y).

Cette conversion traite séparément chaque interaction et donc la zone d'appui correspondante. On connaît, des données d'interaction écran générées pour chaque événement de toucher, le point actif et son éventuel déplacement, noté D, fourni par le vecteur (newX-previousX, newY-previousY).

A partir de ce vecteur, il est aisé de déterminer la vitesse de déplacement élémentaire V=D/période d'acquisition. Cette vitesse ainsi que les coordonnées du point actif sont également traduite dans le référentiel d'affichage par une simple règle de trois (X,Y détectés sont compris entre 0 et 255, alors que x,y affichés dépendent du nombre de pixels selon chaque dimension de l'écran d'affichage).

Ainsi pour chaque zone d'appui, la conversion E400 consiste à déterminer le profil de 'z' sur cette zone et éventuellement le long de son déplacement.

Comme rappelé ci-dessus, le signe de 'z' est fonction de la nature de la contribution (locale ou distante).

L'amplitude de cette valeur, bornée par ailleurs, est fonction de la durée d'appui ("*duration"* de *l'InputEvent* correspondant) lors d'un appui maintenu (*touch down*) et/ou de la vitesse V de déplacement pour un événement de type déplacement (*touch move*).

Comme illustré sur la **figure 9**, plus l'appui est long ou la vitesse de déplacement faible, plus l'amplitude |z| de 'z' est grande afin d'afficher un enfoncement important. Sur cette figure, on a représenté le rendu (vue en section) en l'absence d'appui (A₀), d'un appui de 0,5s (A_{0,5}), d'un appui de 2s (A₂) et d'un appui de 4s (A₄). Au-delà de 4s, la profondeur |z|=zₘₐₓ de l'enfoncement (ou de la protrusion le cas échéant) n'augmente plus. Cela permet d'éviter de dégrader le rendu visuel à l'affichage (trop forte distorsion de la surface maillée par exemple).

Un comportement similaire peut être prévu en fonction de l'inverse de la vitesse V (le profil A₄ correspondrait à une vitesse très lente de déplacement, alors que le profil A_{0,5} correspondrait à une vitesse de déplacement rapide).

D'une façon générale, l'intensité **I** du toucher est fonction du temps d'appui (si pas de déplacement) ou de l'inverse de la vitesse de déplacement.

Pour offrir un affichage confortable pour les utilisateurs, on applique une fonction cosinus sur la largeur de la zone d'appui pour représenter un enfoncement/protrusion courbe. Comme illustré sur la **figure 9**, un maximum de 'z' est obtenu au centre de la ligne dessinée (le déplacement du point actif) et 'z' diminue progressivement (selon la fonction cosinus) pour être nulle aux bords de la zone. La largeur de zone peut être préfixée, déterminée à partir des données d'interaction écran (diamètre ou plus grande longueur de la zone) voire être fonction de la durée d'appui ou vitesse de déplacement (largeur d'autant plus faible que la vitesse est grande ou l'appui court).

Le profil cosinus est en particulier appliqué dans le sens de la largeur de la zone, perpendiculaire au déplacement D.

Une autre fonction d'atténuation de la déformation sur la largeur du tracé que la fonction cosinus peut bien entendu être utilisée.

D'une façon générale, la contribution sur l'amplitude |z| d'un événement reçu centré sur le point (xo, yo), est, pour un point (x,y), fonction de l'intensité 1 précitée atténuée de la distance séparant (xo, yo) et (x, y). Un facteur d'atténuation permet de régler l'effet sur la largeur du tracé.

A l'issue de l'étape E400, on dispose ainsi d'une pluralité de points (x,y,z) constituant un tracé de la contribution de l'utilisateur. On rappelle que z<0 pour une contribution locale (enfoncement) et z>0 pour une contribution à distance (protrusion).

A l'étape E402, on combine ces données d'affichage (x,y,z) déduites des données d'interaction écran *Strokes-data,* avec les données d'affichage correspondant à l'image actuellement à l'écran.

On dispose déjà en mémoire, par exemple de la carte graphique, des valeurs 'z' pour chacun des pixels (x,y) d'affichage. On note ces valeurs z_{actuel}.

On réalise alors une passe sur l'ensemble des pixels à afficher en additionnant, pour chaque pixel, la valeur z_{actuel} avec la valeur z calculée à l'étape E400. Grâce à la convention de signe adoptée, les contributions d'un utilisateur viennent s'additionner dans le temps, et les contributions des deux utilisateurs se soustraient.

En particulier, on pondère la valeur z calculée à l'étape E400 lorsque z_{actuel} est de signe opposé à z calculée (correspondant à une contribution inverse de ce qui est affiché): z_{actuel} ← z_{actuel} + β.z lorsque z_{actuel}.z < 0. Notamment 0<β<1. Ainsi, lorsqu'un utilisateur souhaite répondre à l'autre en appuyant sur la même zone de l'image, l'effet de cet utilisateur est réduit de telle sorte qu'il doit par exemple appuyer deux fois plus longtemps pour faire disparaître la contribution de l'autre.

On rappelle par ailleurs que périodiquement z_{actuel} ← α.z_{actuel}. Cette mise à jour peut notamment être appliquée lors de l'étape E402.

Une fois que tous les pixels ont été traités, la nouvelle image calculée est affichée (étape E404) sur l'écran avec la texture prédéfinie.

On note que les étapes E216 et E306 sont généralement simultanées (ou proches, moyennant le temps de transmission du message XMPP), de telle sorte que le traitement de la figure 8 provoque une mise à jour simultanée de l'affichage sur les deux terminaux, pour afficher toute nouvelle contribution (avec effet miroir d'un terminal à l'autre).

Bien entendu, si des données d'interaction écran locales et des données d'interaction écran reçues sont générées en même temps, leur traitement par un même terminal lors des étapes E216 et E306 est réalisé simultanément.

C'est pourquoi, lors de l'étape E402 de combinaison des contributions de chaque utilisateur, il peut être prévu de comparer les deux contributions aux fins d'identifier si une même zone est activée par les deux utilisateurs en même temps (en tenant compte de l'horodatage t₀ des données d'interaction).

La notion de "même zone" tient également compte de l'inversion de l'image entre les deux utilisateurs. Dans notre exemple et comme illustré par la figure 10, une "même zone" correspond à une zone Z_{A} pour l'un des utilisateurs et la zone symétrique Z_{B} par rapport à l'axe vertical central Δ pour l'autre utilisateur.

En outre, une même zone est activée si les deux utilisateurs maintiennent simultanément, pendant au moins une durée prédéfinie (par exemple 0,5 seconde), un appui sur des zones dont les centres sont distants de moins d'une distance seuil (par exemple 25 pixels) compte tenu de la symétrie évoquée précédemment.

Dans le cas où une "même zone" active est détectée, le terminal 10 est mis en vibration pour indiquer un comportement similaire entre les deux utilisateurs. En variante à la vibration, un son peut être émis ou un changement de couleur ou texture de l'image peut être opéré.

Par ailleurs, d'autres conditions d'activation de la "même zone" peuvent être introduites, par exemple le fait que l'image doit être complètement plane (donc sans enfoncement ni protrusion) pendant ladite durée prédéfinie.

Dans un mode de réalisation de l'invention, on prévoit des moyens d'effacement des contributions sur l'image affichée. Cet effacement consiste principalement en un aplanissement de l'image vers l'image de référence correspondant à la "membrane élastique" au repos. Il peut être mis en oeuvre en soufflant dans le microphone du terminal type téléphone mobile, de sorte à atténuer les effets de relief et donc les contributions.

Pour ce faire, l'application de communication non verbale comprend un module d'écoute du microphone et compare l'intensité du signal généré par le microphone avec des valeurs seuil afin d'obtenir, au-delà d'une première valeur seuil de déclenchement, des coefficients de multiplication (inférieurs à 1) par lesquels on multiplie périodiquement l'image affichée (l'amplitude de chaque point). Ainsi, plus on souffle fort, plus le coefficient utilisé peut être faible de sorte à aplanir au plus vite l'image.

Ce mécanisme permet d'effacer et réinitialiser l'image affichée sur les deux terminaux, plus rapidement qu'en attendant l'atténuation du relief dans le temps (voir étape E106).

Cet effacement peut s'accompagner d'un changement de couleur ou de texture de l'image affichée, par exemple vers des couleurs dites "froides" telles que le bleu ou le blanc.

En variante, l'effacement peut être produit en secouant le terminal, si celui-ci est équipé par exemple d'un accéléromètre. Plus la secousse est vive, plus l'effacement est rapide.

Par ailleurs, ces actions (secousse, souffler) peuvent produire une réinitialisation de la surface maillée 3D plutôt qu'un effacement progressif et proportionnel à l'intensité de l'action..

Dans un mode de réalisation, des informations externes peuvent être utilisées pour modifier l'afflchage.

A titre d'exemple, la couleur ou la texture d'affichage de l'image peut varier en fonction de l'heure du jour présente dans chacun des terminaux: couleurs "froides" la nuit, couleurs "chaudes" au coucher et lever du soleil et couleurs intermédiaires en milieu de journée. Cela permet de tenir compte et de restituer l'environnement dans lequel l'utilisateur évolue lors des interactions. Une amélioration de la communication non verbale est ainsi obtenue.

Egalement, chaque terminal peut disposer de moyens de localisation et d'un accès à un service de météorologie de sorte à déterminer la météo locale. Les couleurs d'affichage du fond de l'image peuvent encore être modifiées en fonction de cette information de météo locale, enrichissant l'interaction dans les échanges entre utilisateurs.

Bien que décrit en lien avec un réseau 30 de type téléphonie mobile, l'invention peut s'appliquer à d'autres types de réseau et de terminaux 10 adaptés, par exemple à un réseau informatique et des terminaux informatiques.

Les exemples qui précèdent ne sont que des modes de réalisation de l'invention qui ne s'y limite pas, notamment en ce qui concerne les divers équipements évoqués.

Notamment, la session de messagerie instantanée établie lors du traitement de la **figure 4** peut être également utilisée pour transmettre des messages verbaux en plus des messages non verbaux selon l'invention comme expliqué ci-après. Cela est possible est incluant, dans les messages XMPP, des balises de texte classiques, par exemple <texte>, en plus des balises <strokes>.

Par ailleurs, pour réaliser une communication selon l'invention entre un plus grand nombre d'utilisateurs, les messages XMPP comprenant les données d'interaction écran sont dupliqués pour chacun des multiples autres utilisateurs et transmis vers ceux-ci par le(s) serveur(s) Jabber.

La contribution de chaque utilisateur peut être affichée sous forme de couleur ou par déformation (enfoncement par exemple) d'une forme ayant un état de repos (par exemple un cube régulier) selon une direction dédiée à l'utilisateur. A titre d'exemple, un polyèdre à N faces permet de faire interagir, entre eux, N utilisateurs, chacun ayant "sa" face sur laquelle il crée des enfoncements susceptibles d'interagir avec les enfoncements des autres utilisateurs. Des fonctions de navigation 3D autour du polyèdre permettent de visualiser plus clairement les contributions de chacun.

## Revendications

1. Procédé de communication par messages non verbaux entre un premier terminal (10₁) et au moins un deuxième terminal (10₂) munis chacun d'un écran tactile (12), comprenant les étapes consistant à :
- obtenir (E202, E208), comme données d'interaction écran (Strokes-data), des événements de toucher (InputEvent, InputTouchEvent) générés par un système de contrôle de l'écran tactile (12) du premier terminal (10₁) en réponse à au moins une action de contact d'un utilisateur sur l'écran tactile (12) dudit premier terminal (10₁) ;
- transmettre (E214) lesdites données d'interaction écran de type événements de toucher audit au moins un deuxième terminal (10₂) au travers d'un réseau de communication (30);
- sur chacun desdits premier et deuxième terminaux (10₁, 10₂), convertir (E400) lesdites données d'interaction écran (Strokes-data) de type événements de toucher (InputEvent, InputTouchEvent) en données d'image graphique (z) correspondant à ladite au moins une action de contact et combiner (E402) lesdites données d'image graphique (z) avec des données d'une image graphique déjà affichée (z_{actuel}) sur l'écran tactile du terminal de sorte à mettre à jour (E216, E306, E404) l'affichage de l'image graphique sur le terminal.

2. Procédé selon la revendication 1, dans lequel lesdites données d'interaction écran sont transmises au cours d'une session de messagerie instantanée basée sur le protocole XMPP.

3. Procédé selon la revendication 2, dans lequel lesdites données d'interaction écran sont encodées selon un format binaire (base64), à l'intérieur d'un élément XML (<strokes>) d'un message XMPP (stanza3, stanza4).

4. Procédé selon la revendication 2 ou 3, comprenant une étape de mémorisation (E204), dans une mémoire tampon (53), d'une pluralité de données d'interaction écran correspondant à une pluralité d'événements de toucher sur l'écran tactile (12) avant transmission (E214) de cette pluralité de données d'interaction écran au sein d'un même message du protocole XMPP.

5. Procédé selon la revendication 4, dans lequel ladite pluralité d'événements de toucher comprend des événements d'interaction simultanée (InputEvent) sur un même écran tactile multi-touches.

6. Procédé selon la revendication 1, comprenant une étape consistant à générer (E202, E210), localement sur ledit deuxième terminal (10₂), des données d'image graphique à partir de données d'interaction écran locales (Strokes-data) de type événements de toucher (InputEvent, InputTouchEvent) résultant d'au moins une action de contact d'un utilisateur sur l'écran tactile (12) dudit deuxième terminal (10₂);
et dans lequel les données d'image graphique converties à partir des données d'interaction écran locales reçues dudit premier terminal (10₁) et les données d'image graphique générées localement sur ledit deuxième terminal (10₂) sont combinées, aux données d'image graphique (z_{actuel}) déjà affichée, de façon opposée (z>0, z<0) entre elles.

7. Procédé selon la revendication 6, dans lequel les images graphiques affichées (20) sur lesdits premier et deuxième terminaux sont des images tridimensionnelles miroir l'une de l'autre.

8. Procédé selon la revendication 1, dans lequel une donnée d'image graphique (z) à combiner et correspondant à au moins une coordonnée (x, y) issue de ladite action de contact est multipliée par un coefficient prédéfini (β) si cette donnée d'image graphique (z) est de signe opposé à la donnée d'image graphique (z_{actuel}) ayant la même coordonnée dans l'image graphique déjà affichée.

9. Procédé selon la revendication 1, comprenant, les étapes suivantes :
- obtenir (E202, E210) localement, comme données d'interaction écran (Strokes-data), des événements de toucher (InputEvent, InputTouchEvent) générés par un système de contrôle de l'écran tactile (12) du deuxième terminal (10₂) et résultant d'au moins une action de contact d'un utilisateur sur l'écran tactile (12) dudit deuxième terminal (10₂) ;
- si, pendant une période prédéfinie, lesdites données d'interaction écran générées localement et les données d'interaction écran dudit premier terminal (10₁) reçues par ledit deuxième terminal correspondent sensiblement à une même zone (Z_{A}, Z_{B}) de l'image à afficher, générer un signal sensoriel au niveau dudit deuxième terminal.

10. Terminal (10₁) de communication par messages non verbaux comprenant :
- un écran tactile (12) doté d'un système de contrôle apte à générer, comme données d'interaction écran locales (Strokes-data), des événements de toucher (InputEvent, InputTouchEvent) en réponse à au moins une action de contact d'un premier utilisateur sur l'écran tactile ;
- un moyen de communication (57) apte à recevoir, d'au moins un deuxième terminal (10₂), des données d'interaction écran (Strokes-data) de type événements de toucher (InputEvent, InputTouchEvent) représentatifs d'au moins une action de contact d'un deuxième utilisateur sur un écran tactile dudit deuxième terminal ;
- un moyen de conversion pour convertir (E400) lesdites données d'interaction écran de type événements de toucher générées localement et/ou reçues, en données d'image graphique locales et/ou reçues (z) ; et
- un moyen de combinaison pour combiner (E402) ces données d'image graphique locales et/ou reçues avec des données d'une image graphique déjà affichée sur l'écran tactile du terminal de sorte à mettre à jour (E216, E306, E404) l'affichage de l'image graphique sur ce terminal.

11. Terminal selon la revendication précédente, dans lequel ledit moyen de communication est également apte à transmettre, au sein d'une session XMPP établie avec ledit autre terminal, les données d'interaction écran générées locales de type événements de toucher.

12. Système de communication par messages non verbaux comprenant :
- un serveur apte à établir une session de messagerie instantanée entre un premier (10₁) et un au moins deuxième (10₂) terminal ;
- au moins un premier et un deuxième terminal selon l'une des revendications 10 ou 11, aptes à s'échanger des données d'interaction écran (Strokes-data) de type événements de toucher (InputEvent, InputTouchEvent) au moyen de ladite session de messagerie instantanée.

13. Système selon la revendication précédente, le système étant configuré de sorte que les données d'interaction écran échangées entre les deux dispositifs sont codées sous forme binaire (base64) à l'intérieur d'un élément XML (<strokes>) d'un message XMPP.

14. Produit programme d'ordinateur lisible par un microprocesseur, comprenant des instructions pour la mise en oeuvre du procédé de communication conforme à l'une des revendications 1 à 9, lorsque ce programme est chargé et exécuté par le microprocesseur.

## Patentansprüche

1. Verfahren zur Kommunikation durch nonverbale Mitteilungen zwischen einem ersten Endgerät (10₁) und mindestens einem zweiten Endgerät (10₂), die je mit einem Berührungsbildschirm (12) versehen sind, das die Schritte enthält, die darin bestehen:
- als Bildschirm-Interaktionsdaten (Strokes-data) Berührungsereignisse (InputEvent, InputTouchEvent) zu erhalten (E202, E208), die von einem Kontrollsystem des Berührungsbildschirms (12) des ersten Endgeräts (10₁) als Antwort auf mindestens eine Kontaktaktion eines Benutzers auf dem Berührungsbildschirm (12) des ersten Endgeräts (10₁) generiert werden;
- die Bildschirm-Interaktionsdaten der Art Berührungsereignisse über ein Kommunikationsnetzwerk (30) an das mindestens eine zweite Endgerät (10₂) zu übertragen (E214);
- in jedem der ersten und zweiten Endgeräte (10₁, 10₂) die Bildschirm-Interaktionsdaten (Strokes-data) der Art Berührungsereignisse (InputEvent, InputTouchEvent) in grafische Bilddaten (z) umzuwandeln (E400), die der mindestens einen Kontaktaktion entsprechen, und die grafischen Bilddaten (z) mit Daten eines bereits auf dem Berührungsbildschirm des Endgeräts angezeigten grafischen Bilds (Z_{actuel}) zu kombinieren (E402), um die Anzeige des grafischen Bilds auf dem Endgerät zu aktualisieren (E216, E306, E404).

2. Verfahren nach Anspruch 1, wobei die Bildschirm-Interaktionsdaten während einer Instant-Messaging-Sitzung basierend auf dem Protokoll XMPP übertragen werden.

3. Verfahren nach Anspruch 2, wobei die Bildschirm-Interaktionsdaten gemäß einem binären Format (base64) innerhalb eines Elements XML (<strokes>) einer Mitteilung XMPP (stanza3, stanza4) codiert werden.

4. Verfahren nach Anspruch 2 oder 3, das einen Schritt der Speicherung (E204) einer Vielzahl von Bildschirm-Interaktionsdaten in einem Pufferspeicher (53) enthält, die einer Vielzahl von Berührungsereignissen auf dem Berührungsbildschirm (12) vor der Übertragung (E214) dieser Vielzahl von Bildschirm-Interaktionsdaten innerhalb einer gleichen Mitteilung des Protokolls XMPP entsprechen.

5. Verfahren nach Anspruch 4, wobei die Vielzahl von Berührungsereignissen Ereignisse gleichzeitiger Interaktion (InputEvent) auf dem gleichen Multitouch-Berührungsbildschirm enthält.

6. Verfahren nach Anspruch 1, das einen Schritt enthält, der darin besteht, lokal im zweiten Endgerät (10₂) grafische Bilddaten ausgehend von lokalen Bildschirm-Interaktionsdaten (Strokes-data) der Art Berührungsereignisse (InputEvent, InputTouchEvent) zu generieren (E202, E210), die aus mindestens einer Kontaktaktion eines Benutzers auf dem Berührungsbildschirm (12) des zweiten Endgeräts (10₂) resultieren;
und wobei die ausgehend von den vom ersten Endgerät (10₁) empfangenen lokalen Bildschirm-Interaktionsdaten umgewandelten grafischen Bilddaten und die lokal im zweiten Endgerät (10₂) generierten grafischen Bilddaten mit den Daten des bereits angezeigten grafischen Bilds (Z_{actuel}) in zueinander entgegengesetzter Form (z>0, z<0) kombiniert werden.

7. Verfahren nach Anspruch 6, wobei die auf den ersten und zweiten Endgeräten angezeigten grafischen Bilder (20) dreidimensionale Spiegelbilder voneinander sind.

8. Verfahren nach Anspruch 1, wobei ein zu kombinierender und mindestens einer von der Kontaktaktion stammenden Koordinate (x, y) entsprechender grafischer Bilddatenwert (z) mit einem vordefinierten Koeffizienten (β) multipliziert wird, wenn dieser grafische Bilddatenwert (z) ein zu dem grafischen Bilddatenwert (Z_{actuel}) entgegengesetztes Vorzeichen hat, der in dem bereits angezeigten grafischen Bild die gleiche Koordinate hat.

9. Verfahren nach Anspruch 1, das die folgenden Schritte enthält:
- lokal als Bildschirm-Interaktionsdaten (Strokes-data) Berührungsereignisse (InputEvent, InputTouchEvent) zu erhalten (E202, E210), die von einem Kontrollsystem des Berührungsbildschirms (12) des zweiten Endgeräts (10₂) generiert werden und aus mindestens einer Kontaktaktion eines Benutzers auf dem Berührungsbildschirm (12) des zweiten Endgeräts (10₂) resultieren;
- wenn während einer vordefinierten Periode die lokal generierten Bildschirm-Interaktionsdaten und die Bildschirm-Interaktionsdaten des ersten Endgeräts (10₁), die vom zweiten Endgerät empfangen werden, im Wesentlichen der gleichen Zone (Z_{A}, Z_{B}) des anzuzeigenden Bilds entsprechen, ein sensorisches Signal im Bereich des zweiten Endgeräts zu generieren.

10. Endgerät (10₁) zur Kommunikation durch nonverbale Mitteilungen, das enthält:
- einen Berührungsbildschirm (12), der mit einem Kontrollsystem versehen ist, das als lokale Bildschirm-Interaktionsdaten (Strokes-data) Berührungsereignisse (InputEvent, InputTouchEvent) als Antwort auf mindestens eine Kontaktaktion eines ersten Nutzers auf dem Berührungsbildschirm generieren kann;
- eine Kommunikationseinrichtung (57), die von mindestens einem zweiten Endgerät (10₂) Bildschirm-Interaktionsdaten (Strokes-data) der Art Berührungsereignisse (InputEvent, InputTouchEvent) empfangen kann, die für mindestens eine Kontaktaktion eines zweiten Benutzers auf einem Berührungsbildschirm des zweiten Endgeräts repräsentativ sind;
- eine Umwandlungseinrichtung, um die lokal generierten und/oder empfangenen Bildschirm-Interaktionsdaten der Art Berührungsereignisse in lokale und/oder empfangene grafische Bilddaten (z) umzuwandeln (E400); und
- eine Kombinationseinrichtung, um diese lokalen und/oder empfangenen grafischen Bilddaten mit Daten eines bereits auf dem Berührungsbildschirm des Endgeräts angezeigten grafischen Bilds zu kombinieren (E402), um die Anzeige des grafischen Bilds auf diesem Endgerät zu aktualisieren (E216, E306, E404).

11. Endgerät nach dem vorhergehenden Anspruch, wobei die Kommunikationseinrichtung ebenfalls innerhalb einer mit dem anderen Endgerät aufgebauten Sitzung XMPP die generierten lokalen Bildschirm-Interaktionsdaten der Art Berührungsereignisse übertragen kann.

12. System zur Kommunikation durch nonverbale Mitteilungen, das enthält:
- einen Server, der eine Instant-Messaging-Sitzung zwischen einem ersten (10₁) und mindestens einem zweiten (10₂) Endgerät aufbauen kann;
- mindestens ein erstes und ein zweites Endgerät nach einem der Ansprüche 10 oder 11, die Bildschirm-Interaktionsdaten (Strokes-data) der Art Berührungsereignisse (InputEvent, InputTouchEvent) mittels der Instant-Messaging-Sitzung untereinander austauschen können.

13. System nach dem vorhergehenden Anspruch, wobei das System so konfiguriert ist, dass die zwischen den zwei Vorrichtungen ausgetauschten Bildschirm-Interaktionsdaten innerhalb eines Elements XML (<strokes>) einer Mitteilung XMPP in binärer Form (base64) codiert sind.

14. Computerprogrammprodukt, das von einem Mikroprozessor lesbar ist und Anweisungen zur Durchführung des Kommunikationsverfahrens nach einem der Ansprüche 1 bis 9 enthält, wenn dieses Programm in einen Mikroprozessor geladen und von ihm ausgeführt wird.

## Claims

1. Method for communicating by non-verbal messages between a first terminal (10₁) and at least one second terminal (10₂) each equipped with a touch-sensitive screen (12), comprising the steps consisting in:
- obtaining (E202, E208), as screen interaction data (Strokes-data), touch events (InputEvent, InputTouchEvent) generated by a control system for the touch-sensitive screen (12) of the first terminal (10₁) in response to at least one contact action by a user on the touch-sensitive screen (12) of said first terminal (10₁);
- transmitting (E214) said screen interaction data of touch event type to said at least one second terminal (10₂) via a communications network (30);
- on each of said first and second terminals (10₁, 10₂), converting (E400) said screen interaction data (Strokes-data) of touch event (InputEvent, InputTouchEvent) type into graphic image data (z) corresponding to said at least one contact action and combining (E402) said graphic image data (z) with data from a graphic image already displayed (z_{current}) on the touch-sensitive screen of the terminal in order to update (E216, E306, E404) the display of the graphic image on the terminal.

2. Method according to Claim 1, in which said screen interaction data are transmitted during an instant messaging session based on the XMPP protocol.

3. Method according to Claim 2, in which said screen interaction data are encoded in a binary format (base64), in an XML element (<strokes>) of an XMPP message (stanza3, stanza4).

4. Method according to Claim 2 or 3, comprising a step of storage (E204), in a buffer (53), of a plurality of screen interaction data corresponding to a plurality of touch events on the touch-sensitive screen (12) before transmission (E214) of this plurality of screen interaction data within one and the same message of the XMPP protocol.

5. Method according to Claim 4, in which said plurality of touch events comprises simultaneous interaction events (InputEvent) on one and the same multi-touch touch-sensitive screen.

6. Method according to Claim 1, comprising a step consisting in generating (E202, E210), locally on said second terminal (10₂), graphic image data based on local screen interaction data (Strokes-data) of touch event (InputEvent, InputTouchEvent) type resulting from at least one contact action by a user on the touch-sensitive screen (12) of said second terminal (10₂);
and in which the converted graphic image data based on the local screen interaction data received from said first terminal (10₁) and the graphic image data generated locally on said second terminal (10₂) are combined, with the graphic image data (z_{current}) already displayed, in such a way that they are opposite (z>0, z<0) to each other.

7. Method according to Claim 6, in which the displayed graphic images (20) on said first and second terminals are three-dimensional mirror images of each other.

8. Method according to Claim 1, in which a graphic image data (z) to be combined and corresponding to at least one coordinate (x, y) resulting from said contact action is multiplied by a predefined coefficient (β) if this graphic image data (z) is of opposite sign to the graphic image data (z_{current}) having the same coordinate in the graphic image already displayed.

9. Method according to Claim 1, comprising the following steps:
- obtaining (E202, E210) locally, as screen interaction data (Strokes-data), touch events (InputEvent, InputTouchEvent) generated by a control system for the touch-sensitive screen (12) of the second terminal (10₂) and resulting from at least one contact action by a user on the touch-sensitive screen (12) of said second terminal (10₂) ;
- if, during a predefined period, said locally generated screen interaction data and the screen interaction data of said first terminal (10₁) received by said second terminal correspond substantially to one and the same zone (Z_{A}, Z_{B}) of the image to be displayed, generating a sensory signal in said second terminal.

10. Terminal (10₁) for communicating by non-verbal messages comprising:
- a touch-sensitive screen (12) equipped with a control system suitable for generating, as local screen interaction data (Strokes-data), touch events (InputEvent, InputTouchEvent) in response to at least one contact action by a first user on the touch-sensitive screen;
- a communication means (57) suitable for receiving, from at least one second terminal (10₂), screen interaction data (Strokes-data) of touch event (InputEvent, InputTouchEvent) type representing at least one contact action by a second user on a touch-sensitive screen of said second terminal;
- a conversion means for converting (E400) said locally generated and/or received screen interaction data of touch event type, into local and/or received graphic image data (z); and
- a combining means for combining (E402) these local and/or received graphic image data with data from a graphic image already displayed on the touch-sensitive screen of the terminal in order to update (E216, E306, E404) the display of the graphic image on this terminal.

11. Terminal according to the preceding claim, in which said communication means is also suitable for transmitting, within an XMPP session set up with said other terminal, the local generated screen interaction data of touch event type.

12. System for communicating by non-verbal messages comprising:
- a server suitable for setting up an instant messaging session between a first (10₁) and at least one second (10₂) terminal;
- at least a first and a second terminal according to one of Claims 10 or 11, suitable for exchanging screen interaction data (Strokes-data) of touch event (InputEvent, InputTouchEvent) type with each other by means of said instant messaging session.

13. System according to the preceding claim, the system being configured in such a way that the screen interaction data exchanged between the two devices are encoded in binary form (base64) in an XML element (<strokes>) of an XMPP message.

14. Computer program product readable by a microprocessor, comprising instructions for the implementation of the method for communicating in accordance with one of Claims 1 to 9, when this program is loaded and executed by the microprocessor.
